# EUROPEAN PATENT SPECIFICATION

(11) **EP 2 874 055 B1**
(45) Date of publication and mention of the grant of the patent: **21.02.2018**
(21) Application number: 13192915.0
(22) Date of filing: 14.11.2013
(51) Int. Cl.: G06F 3/0488

(54) **A method and system for providing a digital copy of a physical image on a screen**
Verfahren und System zur Bereitstellung einer digitalen Kopie eines physikalischen Bildes auf einem Bildschirm
Procédé et système permettant de fournir une copie numérique d'une image physique sur un écran

(43) Date of publication of application: 20.05.2015
(73) Proprietor: Cartamundi Turnhout N.V., 2300 Turnhout (BE)
(72) Inventor: Nietvelt, Steven Karel Maria, 2300 Turnhout (BE)
(74) Representative: Plas, Axel Ivo Michel

(56) References cited:
- EP-A1- 2 645 216
- WO-A2-2008/060641
- US-A1- 2009 002 327
- US-A1- 2012 194 457

## Description

### Field of the Invention

The present invention generally relates to the provisioning of a digital image on a touch screen where the digital image is a copy of a physical image. More particularly the physical image is provided on a card and a digital copy of this physical image is provided on a touch screen of a computing device.

An image, whether digital or physical may represent a drawing, a photograph, a pictograph, artwork or any other still image as long as it can be represented by a physical copy on a card and by a digital copy for displaying it on a display device such as a touch screen.

A computing device comprising a touch screen may be any computing device that has a touch screen embedded or connected to it - either wired or wirelessly - that can be used for display and for detecting touches by fingers or any other touching means such as a stylus for example. Examples of these computing devices are tablets, smartphones, laptops with touch screens and desktop computers with a touch screen monitor. The touch screen may use any available technology for the detection of the touches such as for example capacitive, resistive, infrared, acoustic wave or pulse and optical.

### Background of the Invention

Computing devices with touch screens have become common in our daily lives. Touch screens have been introduced in former devices to increase interactivity with the user. They now show up in laptop computers, computer monitors and television sets serving as a new input interface allowing an easy and intuitive interaction with the user. Also new devices such as tablets, smartphones and music players have already penetrated the market. In these devices the touch screen has become the primary or even only input interface with the user. A keyboard or mouse is no longer needed for interacting with the device. Most touch devices are capable of running software applications either proprietary or developed by third parties.

One such application is proposed in US20120194457A1 where a user provides a card on top of a touch screen of a touch device. The card carries a physical image of a dress and the touch screen shows a doll. The touch device then identifies the card by contact points embedded in the card that are detected by the touch device. By making a movement with the card along a predefined direction, the device then lets appear a digital image on the touch screen of the doll fitted with the dress.

The digital version of the dress is however not an exact copy of the physical version of the dress - it is scaled - and its position is determined by the position of the doll on the screen. The user consequently does not enjoy the experience of sticking a digital image of a dress onto a digital image of a doll that resembles the experience as he/she would enjoy when both the dress and doll would be physical images and the physical carrier of the dress would be a sticker.

Other applications may be envisaged that benefit of the experience of this digital sticker effect. One example is a digital version of a collector book as published by Panini. In the physical version, a user collects physical stickers containing images of sportsmen or cartoon figures which he/she can then stick in predefined places in his collector book. In a digital version, it would be desired to present the collector book in a digital format on a display of a tablet or computer and to enable the user to transfer the images presented on a physical carrier, for example a card, into this digital collector book just as if he was sticking the images from the card to a spot in the physical collector book.

Another example of such an application could be digital version of a sticker book where a user buys a collection of images on a physical carrier mimicking stickers and downloads a digital version of the sticker book on his tablet or computer. The user then desirably could complete the sceneries in the digital book by transferring the images from the physical carrier to the right spots in the scenery presented by the digital book. As a further example, the image could also represent a tattoo which would desirably be transferred somewhere on a body displayed by a computing device.

In US20090002327A1, a computer system is disclosed that detects that a portion of a physical object has come into the physical vicinity of a portion of a multi-touch input display surface. The computer system accesses object identifying data corresponding to the object. The computer system uses the object identifying data to access image data for the object from a repository of stored image data. The computer system uses the accessed image data to generate a virtual replica of the object. The computer system presents the virtual replica of the object at a location on the multi-touch input display surface where the portion of the object was detected.

EP2645216A1 discloses an information input system with a touch panel-mounted information processing device which inputs the position, direction and code information of a card when the card is placed on the touch panel, and further inputs information combining the position of a finger and information of the card when the touch panel is touched through the card. The information input system comprises a touch panel that receives operations by the user by an electrostatic capacitance method, an information processing unit with the touch panel as input means, and a thin-plate medium to be placed on the touch panel, wherein the information processing unit implements a first step of identifying, by means of a predetermined calibration method, the code information defined in the medium and medium information comprising the placing position and placing direction of the medium, and a second step of identifying the coordinate values in a touch panel coordinate system for specifying the position on the medium surface touched by the user in touch operations.

It is therefore an object of the invention to provide a more flexible way in transferring physical images to a computing device for display enhancing the user experience with the effect of a sticker and thus enabling the above applications.

### Summary of the Invention

This object is accomplished, in a first aspect, by the method of claim 1.

The desired position for the digital image thus corresponds to the position of the physical image on the card. This desired position may be directly obtained from the interaction with the identifiers, for example if the position of the image on the card is directly related to the identifiers in a predefined manner. The desired position may also be indirectly obtained from the interaction with the identifiers, for example if only the position of the card on the touch screen can be obtained from the interaction with the identifiers. Then, the spatial relationship between the image on the card and the boundaries of the card may be further derived from the identification of the card. As the card is identified and thus known to the computing device, the location of the desired position may be derived from the position of the card.

By this method the effect of a digital sticker is accomplished, i.e. it is like the image on the card sticks on the touch screen after the removal of the card allowing the use of the method to implement a digital sticker book, collector book or any other application using a digital sticker effect.

When interacting occurs between the identifier and the touch screen, the touch screen thus receives touch inputs as if someone was touching one or more times on the touch screen.

It is not necessary that the physical image is visible when the card is on the touch screen. The card may be on the touch screen with the image facing down or with the image facing up, i.e. visible to a user.

The presenting of the digital image is thus not performed after the identification and obtaining the desired position but only when a further command is received that the digital image may be displayed at the desired position. This allows a precise timing of when the transfer should be done.

The card itself comprises transparent or semi-transparent zones. This allows positioning the card on the touch screen while still seeing the scenery displayed below the card resulting in a more accurate way to position the image at the desired position on the touch screen.

The card itself may for example be completely semi-transparent, so both the image on the card as well as the portions of the card around the image are semi-transparent. This may for example be accomplished by printing a 50% opaque finishing layer comprising the image on a transparent card substrate. This way a user can see both the image and other prints on the cards as well as the scenery under the card displayed by the touch screen.

The card may for example also be transparent except for the image itself. This allows to see the scenery exactly as if the digital copy of the image was already transferred and thus presented on the touch screen.

The identifiers thus comprise one or more visual card marks indicative for actions to be performed enabling the device to obtain the identification and the desired position. The obtaining the identification and desire position further comprises:
- detecting these actions by the touch screen whereby the actions are performed on the card and/or on the touch screen.

The identifiers are thus visual marks provided on the card which guide a user in performing the necessary action that lead to the identification and desired position of the image. All information for the transfer is thus visually provided by the card meaning that no further information must be provided by the touch screen. This allows a user to know all the necessary actions to perform by just inspecting the card.

According to a preferred embodiment the visual card marks are indicative for actions to be performed on three or more of these visual card marks. The obtaining then further comprises:
- detecting touches on three or more of the visual card marks through the card according to the visual card marks;
- obtaining the identification and the desired position from positions of these touches.

The visual card marks are thus indications of where the card should be touched and the actions are thus the touches on these card marks. These touches may be performed by human fingers but also by a pointing device such as a stylus. The advantage of this is that no complex technology needs to be embedded in the card to identify the card or its position as the touches are sensed by the touch screen directly through the card. By having three or more positions to touch the card, the card can be uniquely defined. This may for example be done by varying the distance between the visual card marks depending on the identity of the card. Also the position of the card on the screen and thus the desired position may be obtained from the position of the marks and thus the touches. This may be done by having a fixed relation between the position of the image on the card and the card marks or by specifying the relation between the visual marks and the image in the image database.

According to a further embodiment of the preferred embodiment, the three or more of the visual card marks are numbered dots and the obtaining then further comprises:
- detecting three or more sequential touches on these numbered dots according to the numbers on the numbered dots.

This is easy and straightforward for every user, even for children as the dots on the card are easily identifiable. Moreover, by the sequential touching, the same pattern of dots can be used for different cards, just be changing the order of the touches. Moreover, the actions, i.e. the touches, can be performed by a single finger.

According to an alternative embodiment the one or more visual card marks is a contour of the physical copy on the card. The obtaining then comprises:
- detecting a contour touch following the contour through the card;
- obtaining the identification and desired position by the contour touch.

The contour touch is thus the detection or registration of the followed contour by the touch screen. As the contour is actually part of the image, the card may remain free of other visual marks leaving a visually attractive card. Combined with a transparent background the resulting sticker is just an image surrounded by a transparent area. The contour of the card may also coincide with the contour of the card resulting in a card with the shape of the image. These following of the contour may be performed by human fingers but also by a pointing device such as a stylus.

Advantageously, the visual card marks are printed as a first decorative layer on the card. This is an easy and well controlled production process in the manufacturing of cards. Moreover, as the cards generally get a finishing layer, the visual card marks are part of this finishing layer making the card cheap and easy to manufacture.

Similarly, the physical copy may also be printed as a decorative layer on the card. This may either be done together with the visual card marks making them part of the same decorative layer or this may be done as a separate layer. In this last case, the visual marks may be printed on one side and the physical copy on the other side of the card.

The touch screen of the computing device may be a capacitive touch screen. As they use the capacitive detection of electrical charge, they can detect the touches through the card easily if the card is made thin enough and is non-conductive. This may be accomplished by using paper, cardboard or plastic and keeping the card thinner than 500 micrometres, preferable between 100 and 400 micrometres.

According to a second aspect the invention also relates to the system of claim 10.

It should be noted that a card is advantageously a paper, cardboard or plastic card with a size smaller than the touch screen it is to be positioned on, so preferable smaller than 10cm by 10cm if it is intended to be used on tablet devices available on the market. The card may have a traditional square, rectangular, circular or elliptic shape to resemble classic collector cards. The card may also have irregular shapes, for example the shape of the physical image printed on it. In this case visual identifiers may be printed inside the image or on the other side of the card.

### Brief Description of the Drawings

Fig. 1 illustrates a card comprising a physical image for use in the system according to a preferred embodiment of the invention;
Fig. 2 illustrates a touch device comprising a touch screen showing a desired position on the touch screen for presenting a digital copy of the physical image from figure 1;
Fig. 3 illustrates a user interacting with the card of Fig.1 according to a preferred embodiment;
Fig. 4 illustrates the touch device of Fig. 2 and Fig. 3 with a digital copy of the image on the card in Fig. 1 displayed on the touch screen at a desired position.
Fig. 5 shows a flow diagram of a method performed by a touch device according to the first aspect of the invention.
Fig. 6 illustrates a user interacting with a card and a touch screen by following the contour of the image on the card according to a second embodiment of the invention.

### Detailed Description of Embodiment(s)

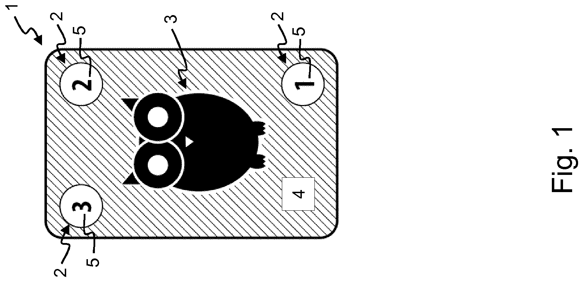

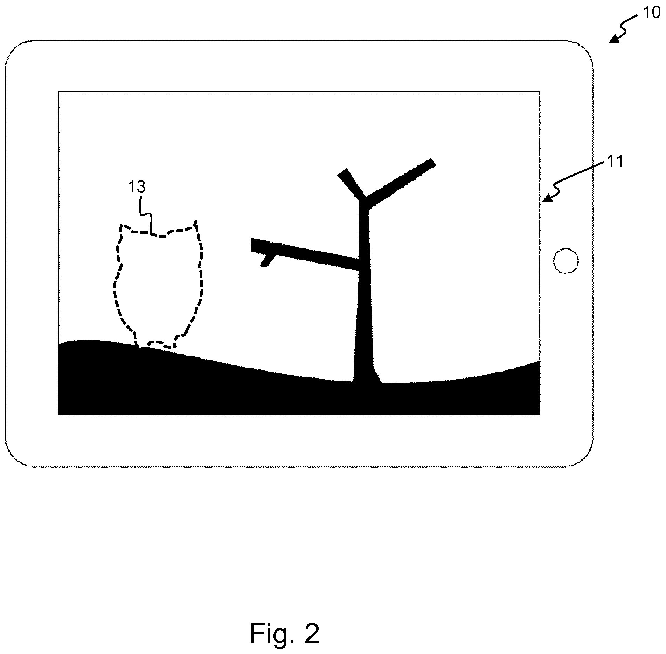

Fig. 1 illustrates a card 1 for use in various aspects of the invention according to a first preferred embodiment. The card comprises an image 3 printed as a decorative layer on the top side of the card. It is a purpose of the invention to have a digital copy of this image 3 displayed on a touch screen of a computing device by placing this card 1 on the touch screen. Such a device is further illustrated in Fig. 2 in the form of a tablet 10 comprising a touch screen 11. By an interaction between the touch screen 11 and the identifiers in the form of the visual card marks 2, the computing device 10 is able to identify the card 1 and to display a digital copy of the image 3 in the form of a digital image on the touch screen 11 of the device 10 at the location where the image 3 on the card 1 was positioned, hereby creating a sticker effect as if the image 3 was released from the card and transferred to the touch screen 11.

The card 1 thus further comprises identifiers or visual card marks in the form of the dots 2 comprising numbers 5. These dots 5 are also printed on the card together with the actual image 3. As it is only the intention to have a sticker effect for the image 3, the background 4 around the image on the card will not be transferred to the touch screen. Therefore, for the background any form of print may be used as scenery. The background or portions of the background may also be made transparent. This allows seeing what is displayed on the touch screen 11 below the card 1 when it is positioned on the touch screen. The background may also be made semi-transparent by printing the background with an opacity smaller than 100% or thus different than fully opaque. Also the image 3 itself may be made semi-transparent in the same way.

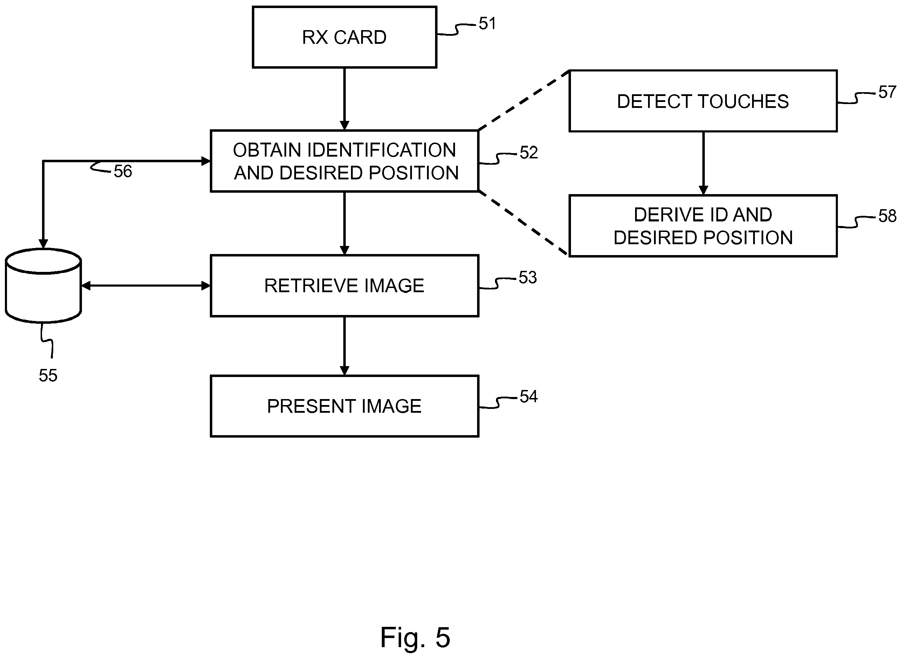

It is the object of the invention to have the image 3 on the card 1 displayed in the form of a digital copy on the touch screen 11. In order to accomplish this, some steps are performed by the computing device or touch device 10. These steps are shown in Fig. 5.

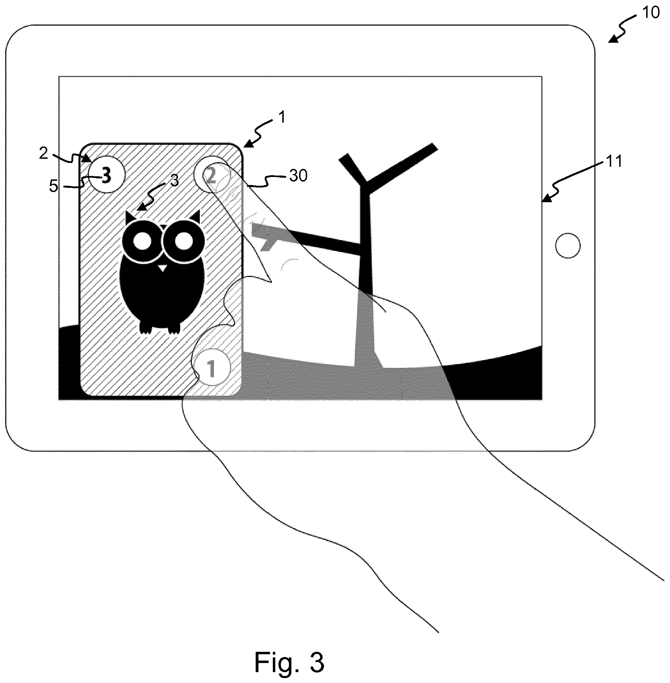

In a first step 51 the touch device receives the card 1 on the touch screen 1' by a user. In order to have the card staying on the screen it may be most convenient to hold the screen more or less horizontal or to hold the card steady by a finger. The user positions the card 1 in a desired position 13 on the touch screen 11 where the digital copy of the image 3 should appear as illustrated in Fig. 3.

In a step 52 the touch device 10 then identifies the card 1 and the desired position 13. According to the preferred embodiment this comprises the sub steps 57 and 58. In the first step 57, the user touches 30 the numbered dots 2 sequentially in the order as indicated by the numbers 5 in the dots. These sequential touches are detected by the touch screen 11 of the touch device 10 as positions on the touch screen. The touches are thus detected through the card 1.

The touch device 10 then identifies the card 1 in the sub step 58 by the relative position of the dots on the card as detected by the touch screen 11. Also the order of the touches identifies the card. Therefore, when two cards with different images 3 have the dots 2 positioned in the same location but with numbers 5 differently, the cards will be identified as different cards as the order of the touches is different.

In the same sub step 58, the touch device also retrieves the desired position 13 on the touch screen from the touches on the dots 2. One possibility to accomplish this is to predefine the relation between the dots 5 and the image 3. For example, the centroid or geometric centre of the polygon defined by the dots 5 on the card 1 may always correspond with the centroid or geometric centre of the image 3 on the card. This way, the touch device 10 may derive the desired position 13 from the touches 30 on the card.

When the desired position 13 is obtained and the identity of the card is established, the touch device retrieves a copy of the physical image based on the identification. Therefore, it retrieves the image in a step 53 from a database 55 comprising a collection of digital images that are available as physical images on cards that can be used as a digital sticker on the touch screen. The digital database may be locally available in the touch device 10 or may be remotely available, for example over a network connection as a cloud service.

As an alternative to the predefined relation between the dots 5 and the image 3, the relation between the dots 5 and the image 3 may also be stored in the database 55. During the step 52 the touch device 10 may then retrieve 56 the relationship between the positions of the dots 5 on the card and the actual image. The relationship may for example be specified as the offset between the centroids of the polygon defined by the dots 5 and the image 3.

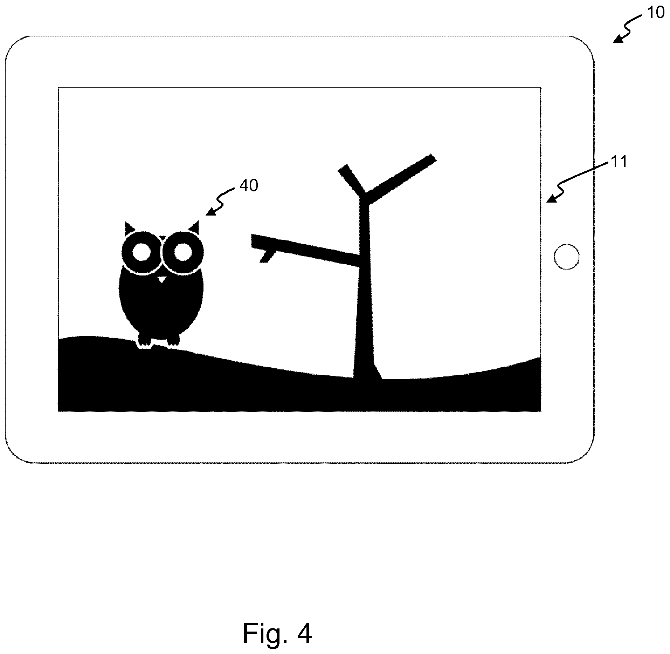

In the last step 54, after the digital image is retrieved, the digital image 40 is displayed on the touch screen at the desired location 13 as illustrated by Fig. 4.

As will be appreciated, several variations on this preferred embodiment are possible. The dots 2 may have different shapes or may be printed on the other side of the card. The card is then to be placed with the image facing down on the touch screen and with the dots on the top side, i.e. the side of the card towards the user. This way, rather than a sticker effect, a stamping effect is created.

Instead of numbers other signs to indicate the order of the touches may be used, for example an amount of dots or stripes within the dots 5.

The dots may also be printed within the image 3. This way the card may have the shape of the image itself and not a rectangular shape as in Fig. 1.

The dots may also be holes in the card 1 instead of printed on the card. This may allow detecting the touches more easily as they are performed directly on the touch screen instead of through the card.

Instead of touching the dots with a finger, the dots may also be touched by a stylus or other pointing devices as long as they are detectable by the touch screen.

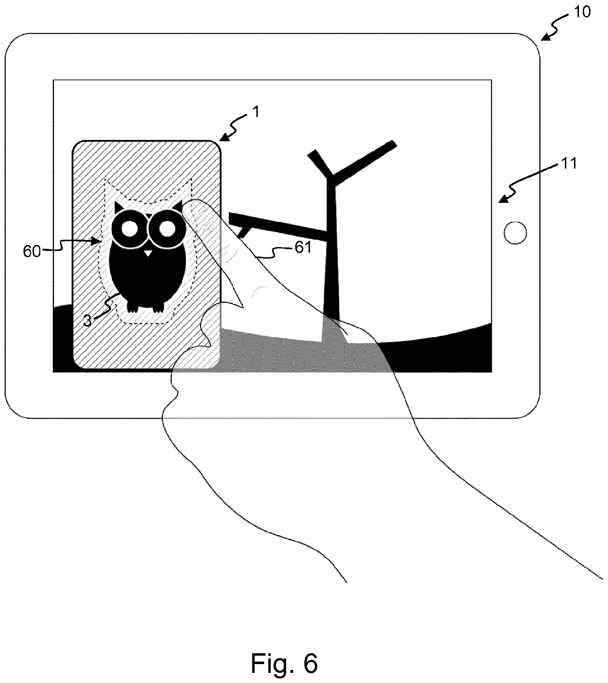

Fig. 6 illustrates a second embodiment of the invention whereby the identifier for identifying the card 1 is the contour 60 of the image 3. According to this embodiment, during the step 52, the user follows the contour 60 of the image 3 on the card 1 with his finger or with a pointing device. This following of the contour 61 is detected by the touch screen 11 and further referred to as a contour touch 61. The advantage with the contour touch 61 is that the card may just contain a print of the image without any other further markings. As the desired position directly corresponds with the contour of the image, the touch device may easily obtain the desired position. The identification is then uniquely defined by the contour of the image. The touch device may then directly search in the database 55 for an image with a contour 60 most closely to the contour touch 61. In Fig. 6 the physical image 3 is provided on a rectangular shaped card 1. Alternatively, the card may also have the shape of the image 3 and thus of the contour 60. This way the contour touch may be performed by the user directly on the card or just besides the card. When the card has the shape of the image, the user also gets a good idea of the final result when the digital image is presented on the touch screen 11 as it resembles the end result when the digital copy 40 is presented on the touch screen 11.

Advantageously, the touch screen according to the above embodiments is a capacitive touch screen. As this type of screen functions by the detection of capacitive coupling between charge carriers, it can easily detect touches on the card 1. In this case, the card is made of a non-conductive substrate such as for example paper, cardboard or plastic and thin enough to allow detection through the card 1 by the touch screen 11. Good results have been obtained with cardboard and paper cards with a thickness between 100 and 400 micrometres.

The image and visual card marks 2 may be printed by a conventional printing technology on a substrate. Examples of such technologies are inkjet printing and offset printing.

Several steps performed by the computing device according to the above embodiments may be implemented as software code or a software application that may be compiled and run as an application on a processor comprised in the computing device. More particular step 52, 53, 54 and steps 57 and 58 may be implemented by software code. In order to detect the touches, the processor may interact with the touch screen to receive the positions of the touches on the touch screen 11. The application may further run as a user application inside an operating system running on this processor facilitating the development and coding of the software code. Such a user application is often developed by a third party offering the application as an "app" to the user of the computing device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description.

In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for providing a digital image (40) at a desired position (13) on a touch screen (11) of a computing device (10) comprising the steps of:
- receiving (51) a card (1) comprising a physical copy (3) of said digital image (40) on said touch screen (11) such that said physical copy (3) is at said desired position (13) on said touch screen; said card comprising identifiers (2) for identifying said card (1) and said desired position (13);
- obtaining (52) an identification of said card and said desired position by interaction of said touch screen (11) with said identifiers (2);
- retrieving (53) said digital image (40) from a digital image database by said identification;
- presenting (54) said digital image (40) on said touch screen (11) at said desired position;
- receiving a transfer command to initiate said presenting;
and wherein said card comprises transparent or semi-transparent zones (4);
and wherein said identifiers comprise one or more visual card marks (2) indicative for actions to be performed enabling said computing device (10) to obtain said identification and said desired position; and wherein said obtaining comprises:
- detecting said actions by said touch screen; said actions being performed on said card and/or on said touch screen.

2. A method according to claim 1 wherein said visual card marks (2) are indicative for actions to be performed on three or more of said visual card marks; and wherein said obtaining comprises:
- detecting (57) touches on said three or more of said visual card marks (2) through said card according to said visual card marks;
- obtaining (58) said identification and said desired position from positions of said touches.

3. A method according to claim 2 wherein said three or more of said visual card marks are numbered dots (2) and said obtaining further comprises:
- detecting three or more sequential touches (30) on said numbered dots (2) according to numbers (5) on said numbered dots.

4. A method according to claim 1 wherein said one or more visual card marks is a contour (60) of said physical copy on said card; and wherein said obtaining comprises:
- detecting (57) a contour touch (61) following said contour (60) through said card;
- obtaining (58) said identification and desired position by said contour touch (61).

5. A method according to any one of claims 1 to 4 wherein said visual card marks are printed as a first decorative layer on said card.

6. A method according to any one of claims 1 to 5 wherein said physical copy is printed as a second decorative layer on said card.

7. A method according to claims 5 and 6 wherein said first and second decorative layer are the same.

8. A method according to any one of the preceding claims wherein said touch screen is a capacitive touch screen.

9. A method according to any one of claims 2 to 4 wherein said touches and/or contour touch is performed by human fingers.

10. A system comprising a card (1) and a computing device (10) for providing a digital image (40) at a desired position (13) on a touch screen (11) of said computing device; said card comprising:
- a physical copy (3) of said digital image (40);
- identifiers (2) for identifying said card and the position of said card on said touch screen; and wherein said identifiers comprise one or more visual card marks (2) indicative for actions to be performed enabling said computing device (10) to obtain said identification and said desired position
- transparent or semi-transparent zones (4);
said computing device being configured to:
- receive (51) said card (1) on said touch screen such that said physical copy (3) is at said desired position on said touch screen;
- obtain (52) an identification of said card and said desired position by interaction of said touch screen (11) with said identifiers (2), and by detecting said actions by said touch screen; said actions being performed on said card and/or on said touch screen
- retrieve (53) said digital image (40) from a digital image database by said identification;
- present (54) said digital image (40) on said touch screen (11) at said desired position;
- receive a transfer command to initiate said presenting (54).

## Patentansprüche

1. Verfahren zur Bereitstellung eines digitalen Bilds (40) an einer gewünschten Position (13) auf einem Berührungsbildschirm (11) einer Rechenvorrichtung (10), die folgenden Schritte umfassend:
- Empfangen (51) einer Karte (1), die eine physische Kopie (3) des digitalen Bilds (40) auf dem Berührungsbildschirm (11) umfasst, so dass sich die physische Kopie (3) an der gewünschten Position (13) auf dem Berührungsbildschirm befindet; wobei die Karte Identifikatoren (2) zur Identifizierung der Karte (1) und der gewünschten Position (13) umfasst;
- Erhalten (52) einer Identifizierung der Karte und der gewünschten Position durch Interaktion des Berührungsbildschirms (11) mit den Identifikatoren (2);
- Abrufen (53) des digitalen Bilds (40) aus einer Datenbank digitaler Bilder durch die Identifizierung;
- Darstellen (54) des digitalen Bilds (40) an der gewünschten Position auf dem Berührungsbildschirm (11);
- Empfangen eines Übertragungsbefehls zur Einleitung der Darstellung;
und wobei die Karte transparente und halbtransparente Zonen (4) umfasst;
und wobei die Identifikatoren eine oder mehrere visuelle Kartenmarkierungen (2) umfassen, die auszuführende Aktionen anzeigen, die es der Rechenvorrichtung (10) ermöglichen, die Identifizierung und die gewünschte Position zu erhalten; und wobei das Erhalten folgendes umfasst:
- Erkennen der Aktionen durch den Berührungsbildschirm; wobei die Aktionen auf der Karte und/oder auf dem Berührungsbildschirm ausgeführt werden.

2. Verfahren nach Anspruch 1, wobei die visuellen Kartenmarkierungen (2) Aktionen anzeigen, die an drei oder mehr der visuellen Kartenmarkierungen auszuführen sind; und wobei das Erhalten folgendes umfasst:
- Erkennen (57) von Berührungen an den drei oder mehr der visuellen Kartenmarkierungen (2) durch die Karte gemäß den visuellen Kartenmarkierungen;
- Erhalten (58) der Identifizierung und der gewünschten Position aus den Positionen der Berührungen.

3. Verfahren nach Anspruch 2, wobei die drei oder mehr visuellen Kartenmarkierungen nummerierte Punkte (2) sind, und wobei das Erhalten ferner folgendes umfasst:
- Erkennen von drei oder mehr sequentiellen Berührungen (30) an den nummerierten Punkten (2) gemäß Nummern (5) auf den nummerierten Punkten.

4. Verfahren nach Anspruch 1, wobei die eine oder die mehreren visuellen Markierungen eine Kontur (60) der physischen Kopie auf der Karte ist bzw. sind; und wobei das Erhalten folgendes umfasst:
- Erkennen (57) einer Konturberührung (61), welche der Kontur (60) durch die Karte folgt;
- Erhalten (58) der Identifizierung und der gewünschten Position durch die Konturberührung (61).

5. Verfahren nach einem der Ansprüche 1 bis 4, wobei die visuellen Kartenmarkierungen als eine erste dekorative Schicht auf die Karte gedruckt sind.

6. Verfahren nach einem der Ansprüche 1 bis 5, wobei die physische Kopie als eine zweite dekorative Schicht auf die Karte gedruckt sind.

7. Verfahren nach Anspruch 5 und 6, wobei die erste und die zweite dekorative Schicht die gleiche Schicht sind.

8. Verfahren nach einem der vorstehenden Ansprüche, wobei der Berührungsbildschirm ein kapazitiver Berührungsbildschirm ist.

9. Verfahren nach einem der Ansprüche 2 bis 4, wobei die Berührungen und/oder die Konturberührung durch Finger von Menschen vorgenommen werden.

10. System, umfassend eine Karte (1) und eine Rechenvorrichtung (10) zur Bereitstellung eines digitalen Bilds (40) an einer gewünschten Position (13) auf einem Berührungsbildschirm (11) der Rechenvorrichtung; wobei die Karte folgendes umfasst:
- eine physische Kopie (3) des digitalen Bilds (40);
- Identifikatoren (2) zur Identifizierung der Karte und der Position der Karte auf dem Berührungsbildschirm; und wobei die Identifikatoren eine oder mehrere visuelle Kartenmarkierungen (2) umfassen, die auszuführende Aktionen anzeigen, die es der Rechenvorrichtung (10) ermöglichen, die Identifizierung und die gewünschte Position zu erhalten;
- transparente oder halbtransparente Zonen (4);
wobei die Rechenvorrichtung für folgende Zwecke gestaltet ist:
- Empfangen (51) der Karte (1) auf dem Berührungsbildschirm, so dass sich die physische Kopie (3) an der gewünschten Position auf dem Berührungsbildschirm befindet;
- Erhalten (52) einer Identifizierung der Karte und der gewünschten Position durch Interaktion des Berührungsbildschirms (11) mit den Identifikatoren (2) und durch Erkennen der Aktionen durch den Berührungsbildschirm; wobei die Aktionen auf der Karte und/oder auf dem Berührungsbildschirm ausgeführt werden;
- Abrufen (53) des digitalen Bilds (40) aus einer Datenbank digitaler Bilder durch die Identifizierung;
- Darstellen (54) des digitalen Bilds (40) an der gewünschten Position auf dem Berührungsbildschirm (11);
- Empfangen eines Übertragungsbefehls zur Einleitung der Darstellung (54).

## Revendications

1. Procédé permettant de fournir une image numérique (40) à une position souhaitée (13) sur un écran tactile (11) d'un dispositif informatique (10) comprenant les étapes consistant à :
recevoir (51) d'une carte (1) comprenant une copie physique (3) de ladite image numérique (40) sur ledit écran tactile (11) de sorte que ladite copie physique (3) se trouve à ladite position souhaitée (13) sur ledit écran tactile ; ladite carte comprenant des identifiants (2) pour identifier ladite carte (1) et ladite position souhaitée (13) ;
obtenir (52) une identification de ladite carte et de ladite position souhaitée par interaction dudit écran tactile (11) avec lesdits identifiants (2) ;
extraire (53) ladite image numérique (40) d'une base de données d'images numériques par ladite identification ;
présenter (54) ladite image numérique (40) sur ledit écran tactile (11) à ladite position souhaitée ;
recevoir une commande de transfert pour lancer ladite présentation ;
et ladite carte comprenant des zones transparentes ou semi-transparentes (4) ;
et lesdits identifiants comprenant une ou plusieurs marques de carte visuelles (2) indiquant les actions à effectuer pour permettre audit dispositif informatique (10) d'obtenir ladite identification et ladite position souhaitée ; et ladite obtention comprenant l'étape consistant à :
détecter lesdites actions par ledit écran tactile ; lesdites actions étant effectuées sur ladite carte et/ou sur ledit écran tactile.

2. Procédé selon la revendication 1, lesdites marques de carte visuelles (2) indiquant les actions à effectuer sur au moins trois desdites marques de carte visuelles ; et ladite obtention comprenant les étapes consistant à :
détecter (57) des contacts sur lesdites au moins trois marques de carte visuelles (2) à travers ladite carte selon lesdites marques de carte visuelles ;
obtenir (58) ladite identification et de ladite position souhaitée à partir des positions desdits contacts.

3. Procédé selon la revendication 2, lesdites au moins trois marques de carte visuelles étant des points numérotés (2) et ladite obtention comprenant en outre l'étape consistant à :
détecter au moins trois contacts séquentiels (30) sur lesdits points numérotés (2) en fonction des nombres (5) sur lesdits points numérotés.

4. Procédé selon la revendication 1, ladite au moins une marque de carte visuelle étant un contour (60) de ladite copie physique sur ladite carte ; et ladite obtention comprenant les étapes consistant à :
détecter (57) un contact de contour (61) suivant ledit contour (60) à travers ladite carte ;
obtenir (58) lesdites identification et position souhaitée par ledit contact de contour (61).

5. Procédé selon l'une quelconque des revendications 1 à 4, lesdites marques de carte visuelles étant imprimées comme une première couche décorative sur ladite carte.

6. Procédé selon l'une quelconque des revendications 1 à 5, ladite copie physique étant imprimée comme une seconde couche décorative sur ladite carte.

7. Procédé selon les revendications 5 et 6, lesdites première et seconde couches décoratives étant identiques.

8. Procédé selon l'une quelconque des revendications précédentes, ledit écran tactile étant un écran tactile capacitif.

9. Procédé selon l'une quelconque des revendications 2 à 4, lesdits contacts et/ou contacts de contour étant effectués par des doigts humains.

10. Système comprenant une carte (1) et un dispositif informatique (10) permettant de fournir une image numérique (40) à une position souhaitée (13) sur un écran tactile (11) dudit dispositif informatique ; ladite carte comprenant :
une copie physique (3) de ladite image numérique (40) ;
des identifiants (2) pour identifier ladite carte et la position de ladite carte sur ledit écran tactile ; et lesdits identifiants comprenant au moins une marque de carte visuelle (2) indiquant les actions à effectuer pour permettre audit dispositif informatique (10) d'obtenir ladite identification et ladite position souhaitée ;
des zones transparentes ou semi-transparentes (4) ;
ledit dispositif informatique étant conçu pour :
recevoir (51) ladite carte (1) sur ledit écran tactile de sorte que ladite copie physique (3) se trouve à ladite position souhaitée sur ledit écran tactile ;
obtenir (52) une identification de ladite carte et de ladite position souhaitée par interaction dudit écran tactile (11) avec lesdits identifiants (2), et en détectant lesdites actions par ledit écran tactile ; lesdites actions étant effectuées sur ladite carte et/ou sur ledit écran tactile ;
extraire (53) ladite image numérique (40) d'une base de données d'images numériques par ladite identification ;
présenter (54) ladite image numérique (40) sur ledit écran tactile (11) à ladite position souhaitée ;
recevoir une commande de transfert pour lancer ladite présentation (54).
